(19) Europäisches Patentamt / European Patent Office / Office européen des brevets

(11) **EP 4 656 305 A1**

(12) **EUROPÄISCHE PATENTANMELDUNG**

(43) Veröffentlichungstag:
**03.12.2025 Patentblatt 2025/49**

(51) Internationale Patentklassifikation (IPC):
**B21D 22/28** (2006.01) **B21D 22/30** (2006.01)
**B21D 51/16** (2006.01) **H01M 50/107** (2021.01)
**H01M 50/119** (2021.01)

(21) Anmeldenummer: 24178746.4

(22) Anmeldetag: **29.05.2024**

(52) Gemeinsame Patentklassifikation (CPC):
**B21D 22/28; B21D 22/30; B21D 31/06;
B21D 51/16; C21D 7/10; C21D 9/0068;
H01M 50/107; H01M 50/119**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **VARTA Microbattery GmbH
73479 Ellwangen Jagst (DE)**

(72) Erfinder:
• **Bühler, Berthold
  73479 Ellwangen (DE)**

• **Drews, Verena
  Giengen 89537 (DE)**
• **Geiger, Michael
  73479 Ellwangen (DE)**
• **Kieninger, Dominik
  73492 Rainau (DE)**
• **Rieker, Patrick
  73479 Ellwangen (DE)**

(74) Vertreter: **Ostertag & Partner Patentanwälte mbB
Azenbergstraße 35
70174 Stuttgart (DE)**

(54) **VERFAHREN ZUR HERSTELLUNG EINES BECHERS FÜR EIN GEHÄUSE EINES ELEKTROCHEMISCHEN ENERGIESPEICHERELEMENTS**

(57) Bei einem Verfahren zur Herstellung eines Bechers (100) für ein Gehäuse eines elektrochemischen Energiespeicherelements (10) wird zunächst der Becher (100) durch einen Blechumformprozess geformt, wobei der Becher einen Becherboden (102) und eine umlaufende Seitenwand (101) umfasst. Der Becherboden (102) und die Seitenwand (101) begrenzen eine im Rahmen des Blechumformprozesses gebildete Innenkante (200), welche sich durch einen Übergang (213) auszeichnet. Weiterhin wird der Becher (100) im Bereich der Innenkante (200) bearbeitet, wobei der Übergang (213) an der Innenkante reduziert wird. In bevorzugter Weise wird die Innenkante (200) mit einem ersten Innenradius (r1) gebildet und durch das Bearbeiten in eine Innenkante (200') mit einem zweiten Innenradius (r2) überführt, wobei der zweite Innenradius (r2) kleiner als der erste Innenradius (r1) ist.

Fig. 4

EP 4 656 305 A1

**Beschreibung**

Die vorliegende Erfindung betrifft ein Verfahren zur Herstellung eines Bechers für ein Gehäuse einer elektrochemischen Energiespeicherzelle sowie ein Verfahren zur Herstellung einer elektrochemischen Energiespeicherzelle. Weiterhin betrifft die Erfindung eine elektrochemische Energiespeicherzelle, die insbesondere mit einem solchen Verfahren herstellbar ist.

ANWENDUNGSGEBIET UND STAND DER TECHNIK

Jedes elektrochemisches Energiespeicherelement im Sinne der vorliegenden Anmeldung umfasst mindestens eine positive und mindestens eine negative Elektrode, welche durch einen Separator voneinander getrennt sind. In elektrochemischen Energiespeicherelementen findet eine elektrochemische, energieliefernde Reaktion statt, welche sich aus zwei elektrisch miteinander gekoppelten, aber räumlich voneinander getrennten Teilreaktionen zusammensetzt. Eine bei vergleichsweise niedrigem Redoxpotential stattfindende Teilreaktion läuft an der negativen Elektrode ab. Eine andere Teilreaktion läuft bei vergleichsweise hohem Redoxpotential an der positiven Elektrode ab. Bei der Entladung werden an der negativen Elektrode durch einen Oxidationsprozess Elektronen freigesetzt. Dies resultiert in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zum Zwecke des Ladungsausgleichs zu einem der Elektrodenreaktion entsprechenden Ionenstrom innerhalb des elektrochemischen Energiespeicherelements. Dieser Ionenstrom durchquert den Separator und wird durch einen ionenleitenden Elektrolyten gewährleistet.

In sekundären (wieder aufladbaren) elektrochemischen Energiespeicherelementen ist diese Entladereaktion reversibel. Es besteht also die Möglichkeit, die bei der Entladung erfolgte Umwandlung der chemischen Energie in elektrische Energie wieder umzukehren.

Ein oftmals verwendetes elektrochemisches Energiespeicherelement ist die Lithium-Ionen-Zelle. Die Lithium-Ionen-Zelle umfasst Elektroden, die Lithium-Ionen reversibel aufnehmen und wieder abgeben können, sowie einen Lithium-Ionen enthaltenden Elektrolyten.

Bei elektrochemischen Energiespeicherelementen und insbesondere auch bei Lithium-Ionen-Zellen sind verschiedene Bauformen bekannt. Neben prismatischen Formen sind Knopfzellen und zylindrische Rundzellen weit verbreitet. Sowohl Knopfzellen als auch Rundzellen haben eine runde und insbesondere eine kreisförmige Grundfläche. Dabei unterscheiden sich zylindrische Rundzellen von Knopfzellen darin, dass Knopfzellen eine Höhe aufweisen, die geringer als ihr Durchmesser ist. Zylindrische Rundzellen weisen hingegen eine Höhe auf, die größer als ihr Durchmesser ist.

Die Gehäuse bei elektrochemischen Energiespeicherelementen sind oftmals aus einem becherartigen Element (kurz: Becher) und einem deckelartigen Element (kurz: Deckel) zusammengesetzt. Im Inneren des Gehäuses werden die elektrochemischen Komponenten des Energiespeicherelements angeordnet und elektrisch mit dem Gehäuse und/oder den Polen des Energiespeicherelements kontaktiert.

Die Elektroden eines Energiespeicherelements können beispielsweise in Form eines wickelförmigen oder eines stapelförmigen Elektroden-Separator-Verbunds vorliegen.

Energiespeicherelemente, die einen Elektroden-Separator-Verbund in Form eines Wickels umfassen, weisen oftmals eine zylindrische Bauform auf und können beispielsweise als zylindrische Rundzellen oder als Knopfzellen ausgebildet sein.

Der Becher des Gehäuses für das Energiespeicherelement wird oftmals durch einen Umformprozess aus einem Blechzuschnitt gebildet. Als Materialien für den Blechzuschnitt kommen beispielsweise vernickelter Stahl, Aluminium oder Edelstahl in Frage. Zum Umformen kommt in der Regel das sogenannte Tiefziehen zum Einsatz. Hierbei wird der Blechzuschnitt in einem einseitig offenen Hohlkörper umgeformt. Beispielsweise erfolgt das Tiefziehen in einer Presse, wobei ein Prägestempel auf den späteren Boden des zu fertigenden Tiefziehteils drückt. Der Prägestempel bewegt sich dabei fortlaufend weiter, so dass der Blechzuschnitt durch einen sogenannten Ziehring gedrückt wird und nachrutscht. Auf diese Weise kann ein Becher mit einer umlaufenden Seitenwand ausgeformt werden. Bei dem Tiefziehprozess ist in der Regel zu berücksichtigen, dass zum einen die Umformbarkeit des Blechzuschnitts gewährleistet sein muss und das zum anderen der Werkzeugverschleiß möglichst gering gehalten werden sollte.

Der durch den Umformprozess gebildete Becher weist eine umlaufende Innenkante auf, die sich zwischen dem Becherboden und der umlaufenden Seitenwand des Bechers befindet. Der Umformprozess bringt es in der Regel mit sich, dass diese Innenkante des Bechers nicht scharfkantig ausgebildet wird und bearbeitungsbedingte Ungenauigkeiten aufweist. Man spricht von einem sogenannten Übergang, der die Innenkante zwischen der umlaufenden Seitenwand und dem Becherboden bis zu einem gewissen Maß ausfüllt und die Innenkante unscharf macht.

Dieser Übergang an der Innenkante des Bechers ist aus herstellungstechnischer Sicht nicht unerwünscht, da er für eine Stabilität des Tiefziehteils währen des Umformprozesses sorgt, so dass der Becherboden bei den auftretenden Kräften während des Tiefziehprozesses nicht einreißt. Andererseits hat der vorhandene Übergang an der Innenkante des Bechers den Nachteil, dass hierdurch das verfügbare Innenraumvolumen des Bechers beschränkt wird.

AUFGABE UND LÖSUNG

Vor diesem Hintergrund stellt sich die Erfindung die Aufgabe, ein verbessertes elektrochemisches Energiespeicherelement bereitzustellen. Das Gehäuse des Energiespeicherelements soll möglichst stabil ausgeführt werden, wobei gleichzeitig das durch das Gehäuse des Energiespeicherelements zur Verfügung gestellte Innenraumvolumen maximiert werden soll, um so die Energiedichte des Energiespeicherelements optimieren zu können.

Diese Aufgabe wird durch das nachfolgend erläuterte Verfahren zur Herstellung eines Bechers für ein Gehäuse eines elektrochemischen Energiespeicherelements gelöst. Bei dem Gehäuse handelt es sich insbesondere um ein metallisches Gehäuse, dessen Komponenten durch einen Metallumformprozess gebildet werden. Das Verfahren zeichnet sich durch die folgenden Verfahrensschritte aus:

> a. Formung des Bechers durch einen Blechumformprozess, insbesondere aus einem Blechzuschnitt, wobei der Becher einen Becherboden, insbesondere einen kreisförmigen oder ovalen Becherboden, und mindestens eine Seitenwand, insbesondere eine umlaufende Seitenwand, umfasst, und wobei der Becherboden und die mindestens eine Seitenwand eine im Rahmen des Blechumformprozesses gebildete Innenkante begrenzen, welche sich durch einen Übergang auszeichnet;
>
> b. Bearbeiten des Bechers im Bereich der Innenkante, wobei der Übergang an der Innenkante reduziert wird.

Erfindungsgemäß ist es vorgesehen, dass der durch den Blechumformprozess bedingte Übergang an der Innenkante in einem Bearbeitungsschritt reduziert wird, so dass die Innenkante stärker in Richtung einer scharfkantigen Innenkante ausgebildet wird. Diese Vorgehensweise bei der Herstellung des Gehäusebechers für ein elektrochemisches Energiespeicherelement hat zwei Vorteile.

Zum einen resultiert hieraus eine erhöhte Stabilität des Bechers an der Schwachstelle zwischen dem Becherboden und der Seitenwand. Zum anderen resultiert hieraus eine Maximierung des Innenvolumens des Gehäusebechers.

In der Regel ist man bestrebt, das Volumen eines Gehäusebechers maximal auszunutzen, was im Fall eines Übergangs schwierig sein kann. Passt man beispielsweise den Außendurchmesser eines zylindrischen Elektroden-Separator-Verbunds exakt an den Innendurchmesser eines zylindrischen Gehäusebechers an, kann der Elektroden-Separator-Verbund nicht bis auf den Becherboden geschoben werden, wenn der Becher im Bereich seiner Innenkante einen zu starken Übergang aufweist.

Durch die Bearbeitung des Bechers kann mehr Raum für die elektrochemischen Materialien des Energiespeicherelements, also insbesondere für die Elektroden, bereitgestellt werden, so dass insgesamt die Energiedichte des Energiespeicherelements erhöht werden kann. Beispielsweise kann ein Elektroden-Separator-Verbund in Form eines Wickels oder in Form eines Stapels auch bei vergleichsweise größeren Außendimensionen auf dem Becherboden (Gehäuseboden) aufgesetzt werden. Weiterhin kann beispielsweise auch der Durchmesser eines wickelförmigen Elektroden-Separator-Verbunds etwas größer als bei einem herkömmlich hergestellten Gehäuse ausgebildet werden.

Bei dem erfindungsgemäßen Verfahren ist es bevorzugt, dass die Reduzierung des Übergangs an der Innenkante erst nach der Formung des Bechers erfolgt. Der Bearbeitungsschritt ist somit bevorzugt ein Nachbearbeitungsschritt.

In besonders bevorzugten Ausgestaltungen des erfindungsgemäßen Verfahrens ist mindestens eines der folgenden Verfahrensmerkmale vorgesehen:

> a. Der Blechumformprozess erfolgt mittels eines Tiefziehwerkzeugs.
>
> b. Das Bearbeiten des Bechers, insbesondere das Nachbearbeiten des Bechers, erfolgt mittels eines separaten Stempelwerkzeugs.

Vorzugsweise sind die unmittelbar vorstehenden Merkmale a. und b. in Kombination miteinander vorgesehen.

Die Verwendung eines separaten Stempelwerkzeugs für das Bearbeiten des Bechers zur Reduktion des Übergangs im Bereich der Innenkante ermöglicht eine Kaltverfestigung im Bereich der Innenkante, die für eine erhöhte Steifigkeit an dieser Schwachstelle des Gehäusebechers sorgen kann.

Die Realisierung des nachgelagerten Arbeitsschritts mit einem Stempelwerkzeug lässt sich sehr gut auch in bestehende Herstellungsprozesse integrieren.

In besonders bevorzugten Ausführungsformen des erfindungsgemäßen Verfahrens zeichnet sich das Verfahren durch das folgende zusätzliche Merkmal aus:

> a. Die Innenkante wird mit einem ersten Innenradius (r1) gebildet und durch das Bearbeiten, insbesondere das Nachbearbeiten, in eine Innenkante mit einem zweiten Innenradius (r2) überführt, wobei der zweite Innenradius (r2) kleiner als der erste Innenradius (r1) ist.

Die Innenradien (r1) und (r2) lassen sich jeweils als Radius eines Kreises, der an den von der jeweiligen Innenkante gebildeten Bogen (den Übergang) angelegt werden kann, bestimmen. Dies wird im Zusammenhang mit den Zeichnungen noch ausführlicher erläutert. Durch die Bearbeitung der Innenkante verkleinert sich der Kreis, der an den von der bearbeiteten Innenkante gebildeten Bogen angelegt werden kann, so dass folglich auch der Innenradius (r2) des verkleinerten Kreises im Vergleich zu (r1) kleiner ist.

In besonders bevorzugten Ausgestaltungen des erfindungsgemäßen Verfahrens stehen der Innenradius und die Wandstärke im Bereich des Becherbodens in einem definierten Verhältnis. Diesbezüglich zeichnet sich das Verfahren insbesondere durch eines der folgenden zusätzlichen Merkmale aus:

a. Nach der Bearbeitung, insbesondere der Nachbearbeitung des Bechers im Bereich der Innenkante, beträgt der Innenradius (r2) weniger als das 1,7-fache der maximalen Wandstärke (s) des Becherbodens.

b. Nach der Bearbeitung, insbesondere der Nachbearbeitung des Bechers im Bereich der Innenkante beträgt der Innenradius (r2) maximal das 1,5-fache der maximalen Wandstärke (s) des Becherbodens.

Das beschriebene Verhältnis gemäß dem vorgenannten Merkmal b. ist besonders bevorzugt.

Der resultierende Innenradius (r2) nach der Bearbeitung ergibt sich somit aus (r2) < 1,7 * (s) oder, besonders bevorzugt, (r2) ≤ 1,5 * (s).

Durch den Tiefziehprozess verringert sich die Wandstärke des Materials im Bereich der Seitenwand des Bechers. Die maximale Wandstärke des Becherbodens entspricht allerdings in der Regel der Stärke des Ausgangsmaterials, also des Blechzuschnitts, aus dem der Becher gebildet wird. Idealerweise wird sie im Zentrum des Becherbodens bestimmt.

Die maximale Wandstärke im Bereich des Becherbodens, beispielsweise des Becherbodens einer zylindrischen Rundzelle mit dem Formfaktor 21700 oder 18650, kann in einigen bevorzugten Ausführungsformen in einem Bereich von 0,25 mm oder 0,3 mm liegen. Der Innenradius (r1) kann nach einem herkömmlichen Tiefziehprozess kann beispielsweise 0,5 mm betragen. Nach der erfindungsgemäßen Bearbeitung der Innenkante beträgt der Innenradius (r2) dann bevorzugt weniger als 0,5 mm.

Vorzugsweise wird auch der Außenradius der Außenkante des Bechers im Bodenbereich, der durch einen an die äußere Biegung der Außenkante anlegbaren Kreis bzw. durch dessen Radius beschrieben werden kann, bei der Bearbeitung verkleinert. Da der Außenradius für die Steifigkeit des Gehäusebechers von Bedeutung ist, wird hierdurch die Stabilität des Gehäusebechers weiter verbessert.

Die Erfindung umfasst weiterhin ein Verfahren zur Herstellung eines elektrochemischen Energiespeicherelements, das die folgenden Verfahrensschritte umfasst:

a. Bereitstellen eines Bechers gemäß der obigen Beschreibung;

b. Bereitstellen eines Deckels;

c. Montage des elektrochemischen Energiespeicherelements unter Verwendung des Bechers und des Deckels.

Die Montage des elektrochemischen Energiespeicherelements und die Bereitstellung eines Deckels für das Energiespeicherelement unterscheiden sich im Wesentlichen nicht von herkömmlichen Verfahren. Der Unterschied zu der herkömmlichen Herstellung eines Energiespeicherelements liegt in erster Linie in der Herstellung des Bechers für das Gehäuse, wobei der Becher erfindungsgemäß sich durch die beschriebene Bearbeitung, insbesondere die Nachbearbeitung des Bechers im Bereich der Innenkante, auszeichnet, bei der der Übergang an der Innenkante reduziert wird. Durch diese Maßnahme kann zum einen das Innenvolumen des Bechers, das für die elektrochemischen Komponenten des Energiespeicherelements zur Verfügung steht, maximiert werden. Zum anderen wird hierdurch die Steifigkeit des Bechers verbessert.

In besonders bevorzugten Ausgestaltungen des erfindungsgemäßen Verfahrens ist eines der folgenden Merkmale vorgesehen:

a. Das elektrochemische Energiespeicherelement ist eine zylindrische Rundzelle.

b. Das elektrochemische Energiespeicherelement ist eine Knopfzelle.

Sowohl die zylindrische Rundzelle als auch die Knopfzelle zeichnen sich durch ein im Wesentlichen zylindrisches Gehäuse bzw. durch eine zylindrische Mantelfläche des Gehäuses aus.

Diese Form des Gehäuses lässt sich in der Praxis in besonders vorteilhafter Weise durch ein becherförmiges Tiefziehteil und einen Deckel herstellen. Diese Formen von Energiespeicherelementen können daher mit besonderem Vorteil gemäß dem erfindungsgemäßen Verfahren hergestellt werden. Prinzipiell eignet sich das erfindungsgemäße Verfahren auch für andere Formen von Energiespeicherelementen, deren Gehäuse durch ein Blechumformverfahren hergestellt werden, beispielsweise prismatische Formen.

Das erfindungsgemäße Verfahren ermöglicht eine besonders vorteilhafte Fertigung von Gehäusebechern für Energiespeicherzellen. Das beschriebene Verfahren wird auf der einen Seite den Anforderungen an die Umformtechnik gerecht, so dass der Becherboden bei den auftretenden Kräften nicht einreißt. Auf der anderen Seite wird durch die Bearbeitung eine Optimierung des zur Verfügung stehenden Innenraumvolumens des Gehäusebechers erreicht und gleichzeitig eine verbesserte Stabilität des Gehäusebechers bewirkt.

Die Erfindung umfasst weiterhin einen Becher und ein Gehäuse für ein elektrochemisches Energiespeicherelement, die gemäß dem beschriebenen Verfahren herstellbar sind. Zudem umfasst die Erfindung ein elektrochemisches Energiespeicherelement, das nach dem beschriebenen Verfahren herstellbar ist. Sowohl der Becher und das Gehäuse als auch ein entsprechendes elektrochemisches Energiespeicherelement zeichnen sich durch ein maximiertes Innenvolumen und eine verbesserte Stabilität des Gehäuses gegenüber herkömmlichen Gehäusen bzw. gegenüber herkömmlichen elektrochemischen Energiespeicherelementen aus.

Neben der Optimierung des verfügbaren Innenvolumens hat die erfindungsgemäße Herstellung des Gehäusebechers insbesondere bei einer Nachbearbeitung mittels eines separaten Stempelwerkzeugs den besonderen Vorteil, dass sich durch die Bearbeitung eine Materialverfestigung ergibt, die sich auf die Stabilität des Gehäuses besonders vorteilhaft auswirkt.

In besonders bevorzugten Ausführungsformen umfasst das Gehäuse für das elektrochemische Energiespeicherelement einen Becher und einen Deckel, wobei der Becher im Bereich der Innenkante zwischen dem Becherboden und der Seitenwand des Bechers einen Innenradius ($r2$) aufweist, der maximal das 1,7-fache der maximalen Wandstärke ($s$) des Becherbodens beträgt. Besonders bevorzugt beträgt der Innenradius ($r2$) das 1,5-fache der maximalen Wandstärke ($s$) des Becherbodens oder weniger.

Nachfolgend werden Ausführungsbeispiele der Erfindung anhand der Zeichnungen näher erläutert. Die einzelnen Merkmale können jeweils für sich oder in Kombination miteinander verwirklicht sein.

KURZE BESCHREIBUNG DER ZEICHNUNGEN

In den Zeichnungen zeigen:

Figur 1      Allgemeine Skizze zur Erläuterung der gewählten Terminologie betreffend die Beschreibung der Innenkanten von Werkstücken;

Figur 2      Längsansicht einer zylindrischen Rundzelle zur Illustration axial wirkender Kräfte;

Figur 3      fotografische Darstellung eines herkömmlichen Gehäusebecherbodens nach der Einwirkung axial wirkender Kräfte;

Figur 4A, B      schematische Schnittansichten aus dem Bereich zwischen Becherboden und Seitenwand eines Gehäuses eines elektrochemischen Energiespeicherelements vor (Figur4A) und nach (Figur 4B) einer Nachbearbeitung gemäß der Erfindung;

und

Figur 5A, B      fotografische Darstellungen von Ausschnitten eines längsgeschnittenen Gehäusebechers vor (Figur 5A) und nach (Figur 5B) einer Nachbearbeitung gemäß der Erfindung.

BESCHREIBUNG BEVORZUGTER AUSFÜHRUNGSBEISPIELE

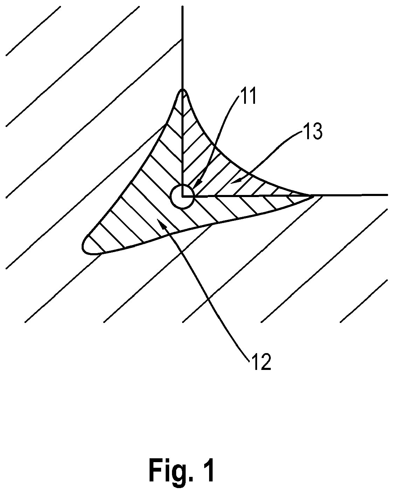

Anhand von **Fig.** 1 wird die bei der Beschreibung des erfindungsgemäßen Verfahrens verwendete Terminologie, die sich auch aus DIN EN ISO 13715:2020-01 ergibt, erläutert. Dargestellt ist ein Werkstück mit einer Innenkante. Die Innenkante kann auf drei Arten ausgebildet sein. Wenn die aufeinander stehenden Wände des Werkstücks im Wesentlichen einen rechten Winkel ausbilden (Bezugszeichen 11), wird von einer scharfkantigen Innenkante gesprochen. Wenn in dem Bereich der Innenkante über diese scharfkantige Innenkante hinaus Material entfernt ist, wird von einer Abtragung gesprochen (Bezugszeichen 12). Wenn die Innenkante von weiterem Material, das die scharfkantige Innenkante überlagert, definiert wird, spricht man von einem Übergang (Bezugszeichen 13). Letzterer ist im Zusammenhang mit der erfindung besonders relevant.

Im Rahmen des erfindungsgemäßen Verfahrens wird der Übergang 13 an der Innenkante eines Gehäusebechers für ein elektrochemisches Energiespeicherelement reduziert, um das Innenvolumen des Gehäusebechers zu maximieren und gleichzeitig eine Versteifung und damit Stabilisierung des Gehäusebechers zu erreichen. Der Übergang resultiert aus einem bei der Herstellung des Gehäusebechers durchgeführten Blechumformprozess. Er wird durch die verwendeten Werkzeuge und das verwendete Material beeinflusst. Der Übergang an der Innenkante hat eine stabilisierende Funktion bereits während des Umformprozesses.

Durch eine nachträgliche Reduzierung des Übergangs 13, insbesondere im Zuge einer Nachbearbeitung des Bechers, kann zum einen eine Verbesserung der Geometrie des Bechers erreicht werden, wodurch das verfügbare Innenraumvolumen maximiert wird. Zum anderen kann das Materialgefüge des Bechers verbessert werden, indem die Nachbearbeitung eine Kaltverformung des Materials im Bereich der Innenkante und damit eine partiell größere Verfestigung bewirkt, die die Festigkeit und die Steifigkeit des Gehäusebechers optimiert.

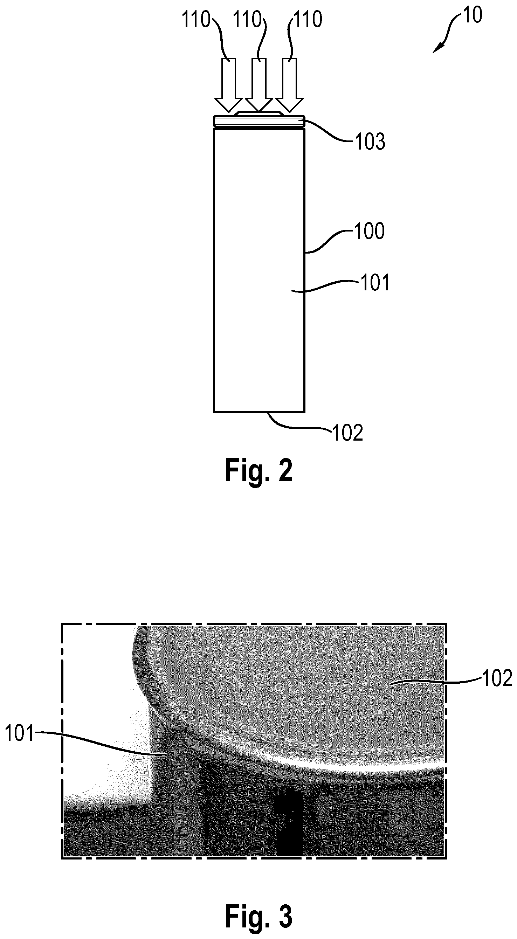

**Fig. 2** und **Fig. 3** illustrieren die Auswirkungen von axial wirkenden Kräften auf das Gehäuse einer herkömmlichen zylindrischen Rundzelle. **Fig. 2** zeigt die zylindrische Rundzelle 10 in einer seitlichen Ansicht, wobei das Gehäuse aus einem Becher 100 mit einer umlaufenden Seitenwand 101 und einem Becherboden 102 und einem Deckel 103 zusammengesetzt ist. Die Pfeile 110 axial wirkende Kräfte, die auf das Gehäuse beispielsweise während des Fertigungsprozesses, aber auch später bei einer Deformation des Energiespeicherelements, beispielsweise in Folge eines Unfalls, wirken können. **Fig. 3** ist eine fotografische Darstellung der Auswirkungen dieser axial wirkenden Kräfte 110. Überschreiten die axialen Kräfte bei der Herstellung einen Grenzwert, der maßgeblich (aber nicht ausschließlich) durch die Dicke des verwendeten Blechs bestimmt wird, so verformt sich der Becherboden 102 und fällt nach innen ein. Ein derart deformierter Becher ist nicht zu gebrauchen. Bei der herkömmlichen Fertigung eines Gehäusebechers für ein elektrochemisches Energiespeicherelement ist es aufgrund dieser Problematik schwierig, die Wandstärke des Bechers zu reduzieren, was im Sinne einer Energiedichtenoptimierung aber wünschenswert wäre.

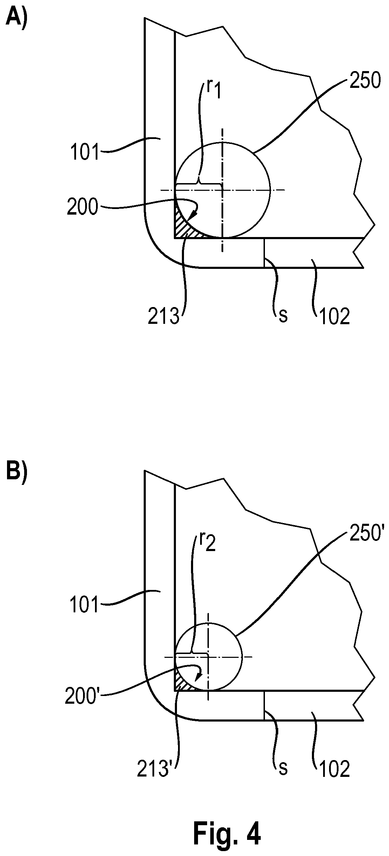

Eine mögliche Optimierung gemäß der beschriebenen Erfindung wird anhand von **Fig. 4A** und **Fig. 4B** erläutert. **Fig. 4A** zeigt einen Schnitt durch den Gehäusebecher im Bereich der Innenkante 200 zwischen dem Becherboden 102 und der umlaufenden Seitenwand 101 des Gehäusebechers. In der Regel ist die maximale Wandstärke (s) des Becherbodens 102 größer als die Wandstärke der umlaufenden Seitenwand 101, bedingt durch den Tiefziehprozess bei der Herstellung des Gehäusebechers. Die Innenkante 200 zwischen dem Becherboden 102 und der Seitenwand 101 ist durch einen Übergang 213 gekennzeichnet (vgl. hierzu Fig. 1). Der Übergang 213 resultiert aus dem Blechumformprozess bei der Herstellung des Gehäusebechers. Der Übergang 213 lässt sich durch den in diesem Bereich angelegten Kreis 250 charakterisieren, der wiederum anhand der Länge seines Radius (r1) näher beschrieben werden kann.

**Fig. 4B** illustriert in vergleichbarer Weise einen erfindungsgemäßen Gehäusebecher bzw. einen Gehäusebecher nach der erfindungsgemäßen Nachbearbeitung. Gegenüber der Ausgangssituation nach einem herkömmlichen Umformprozess gemäß Fig. 4A bzw. gegenüber einem herkömmlichen Gehäusebecher ist bei dem Becher gemäß Fig. 4B der Übergang 213' der Innenkante 200' reduziert. Diese Reduzierung des Übergangs 213 lässt sich durch die Verkleinerung des Innenradius (r1) auf den Innenradius (r2) des Kreis 250' quantifizieren.

Da sich diese Reduzierung nur schwer im Rahmen eines herkömmlichen Blechumformprozesses bzw. mittels eines Tiefziehwerkzeugs bei einem Zugdruckumformen eines Blechzuschnitts realisieren lässt, ist es in bevorzugten Ausgestaltungen der Erfindung vorgesehen, dass zur Reduzierung des Übergangs eine Nachbearbeitung des Bechers durchgeführt wird, vorzugsweise mittels eines separaten Stempelwerkzeugs. Die Reduzierung des Übergangs wirkt sich auch positiv auf die Steifigkeit des resultierenden Gehäusebechers aus.

In besonders bevorzugten Ausführungsformen des erfindungsgemäßen Gehäusebechers steht der reduzierte Innenradius (r2) in einem Verhältnis zu der maximalen Wandstärke (s) des Becherbodens gemäß der folgenden Formel:

$$(r2) \leq 1{,}5 * (s).$$

Fertigungstechnisch ist es vorteilhaft, die Verkleinerung des Innenradius in einem separaten Bearbeitungsschritt nach dem eigentlichen Tiefziehprozess umzusetzen. Der nachgelagerte Nachbearbeitungsschritt wirkt sich darüber hinaus sehr positiv auf das Materialgefüge aus, da hierdurch eine Kaltverfestigung stärker aufgeprägt werden kann.

Die Erfinder konnten in diesem Zusammenhang zeigen, dass ein erfindungsgemäß ausgebildeter Gehäusebecher im Vergleich mit einem herkömmlichen Gehäusebecher einer um 50 % höher wirkenden Axialkraft standhalten kann.

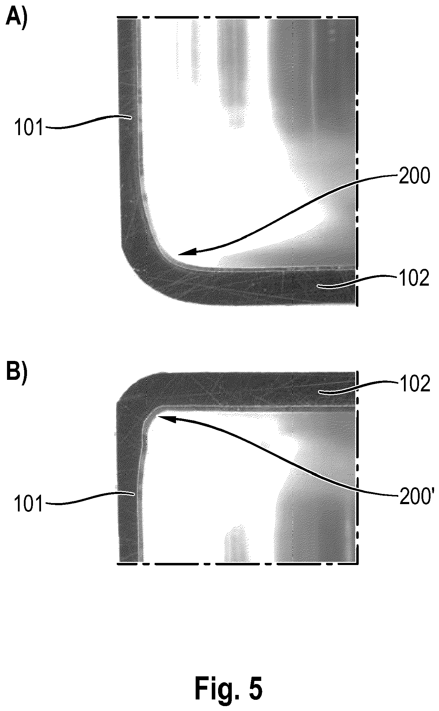

**Fig. 5A** ist eine fotografische Darstellung des Bereichs der Innenkante zwischen dem Becherboden 102 und der Seitenwand 101 eines längsgeschnittenen Gehäusebechers vor einer Nachbearbeitung gemäß der Erfindung. Die Innenkante 200 zeichnet sich durch einen Übergang aus. **Fig. 5B** zeigt im Vergleich hierzu die Innenkante 200' eines erfindungsgemäßen bearbeiteten, ansonsten jedoch identischen Gehäusebechers, die sich im Vergleich zu dem unbearbeiteten Gehäusebecher durch einen reduzierten Übergang im Bereich der Innenkante 200' auszeichnet.

Der reduzierte Übergang im Bereich der Innenkante 200' des Gehäusebechers sorgt für eine Optimierung der Geometrie des Innenraums des Gehäusebechers, insbesondere hinsichtlich der Aufnahme zylindrischer Elektroden-Separator-Verbünde, und ist ursächlich für eine verbesserte mechanische Stabilität des Gehäusebechers.

Die maximale Wandstärke des Materials im Bereich des Becherbodens 102 kann bei einer herkömmlichen zylindrischen Rundzelle, beispielsweise bei einer Rundzelle mit dem Formfaktor 21700, insbesondere in einem Bereich von 0,25 mm bis 0,3 mm liegen. Herkömmlicherweise resultiert aus dem Blechumformprozess zur Herstellung eines Gehäusebechers aus einem Blechzuschnitt mit einer Wandstärke von 0,25 mm bis 0,3 mm ein Becher mit einer Innenkante mit einem Innenradius (r1) von etwa 0,5 mm. Das Verhältnis von Innenradius (r1) zu Wandstärke (s) des Ausgangsmaterials bzw. zu der resultierenden maximalen Wandstärke (s) im Bereich des Becherbodens beträgt dabei vorzugsweise

$$(r1) = 2 * s \text{ bis } (r1) = 1{,}7 * (s).$$

Erfindungsgemäß wird dieses Verhältnis verringert, d. h. bei erfindungsgemäß hergestellten Bechern beträgt das Verhältnis bevorzugt:

$$(r2) < 1{,}7 * (s)$$

Durch die hiermit verbundene Reduzierung des Übergangs bei der Innenkante wird die Stabilität durch die damit verbundene Versteifung des Gehäusebechers erhöht, wobei gleichzeitig das zur Verfügung stehende Innenraumvolumen erhöht wird.

**Patentansprüche**

1.  Verfahren zur Herstellung eines Bechers (100) für ein Gehäuse eines elektrochemischen Energiespeicherelements (10) mit den folgenden Verfahrensschritten:

    a. Formung des Bechers (100) durch einen Blechumformprozess, wobei der Becher einen Becherboden (102) und eine umlaufende Seitenwand (101) umfasst, und wobei der Becherboden (102) und die Seitenwand (101) eine im Rahmen des Blechumformprozesses gebildete Innenkante (200) begrenzen, welche sich durch einen Übergang (213) auszeichnet;
    b. Bearbeiten des Bechers (100) im Bereich der Innenkante (200), wobei der Übergang (213) an der Innenkante (200) reduziert wird.

2.  Verfahren zur Herstellung eines elektrochemisches Energiespeicherelement nach Anspruch 1 mit mindestens einem der folgenden Verfahrensmerkmale:

    a. Der Blechumformprozess erfolgt mittels eines Tiefziehwerkzeugs.
    b. Das Bearbeiten des Bechers (100) erfolgt mittels eines separaten Stempelwerkzeugs.

3.  Verfahren nach Anspruch 1 oder Anspruch 2 mit dem folgenden zusätzlichen Verfahrensmerkmal:

    a. Die Innenkante (200) wird mit einem ersten Innenradius (r1) gebildet und durch das Bearbeiten in eine Innenkante (200') mit einem zweiten Innenradius (r2) überführt, wobei der zweite Innenradius (r2) kleiner als der erste Innenradius (r1) ist.

4.  Verfahren nach Anspruch 3 mit einem der folgenden zusätzlichen Merkmale:

    a. Nach der Bearbeitung des Bechers (100) im Bereich der Innenkante (200') beträgt der Innenradius (r2) weniger als das 1,7-fache der maximalen Wandstärke (s) des Becherbodens (102).
    b. Nach der Bearbeitung des Bechers (100) im Bereich der Innenkante (200') beträgt der Innenradius (r2) maximal das 1,5-fache der maximalen Wandstärke (s) des Becherbodens (102).

5.  Verfahren zur Herstellung eines elektrochemisches Energiespeicherelements mit den folgenden Verfahrensschritten:

    a. Bereitstellen eines Bechers (100) gemäß einem der Ansprüche 1 bis 4;
    b. Bereitstellen eines Deckels (103);
    c. Montage des elektrochemischen Energiespeicherelements unter Verwendung des Bechers (100) und des Deckels (103).

6.  Verfahren nach einem der vorhergehenden Ansprüche mit einem der folgenden Merkmale:

    a. Das elektrochemische Energiespeicherelement ist eine zylindrische Rundzelle.
    b. Das elektrochemische Energiespeicherelement ist eine Knopfzelle.

7.  Gehäuse für ein elektrochemisches Energiespeicherelement (10) oder elektrochemisches Energiespeicherelement (10), herstellbar nach einem Verfahren gemäß einem der Ansprüche 1 bis 6.

8.  Gehäuse für ein elektrochemisches Energiespeicherelement (10) oder elektrochemisches Energiespeicherelement (10) mit einem Gehäuse, insbesondere nach Anspruch 7, wobei das Gehäuse einen Becher (100) und einen Deckel (103) umfasst, **dadurch gekennzeichnet, dass** der Becher (100) des Gehäuses im Bereich einer Innenkante (200') zwischen einem Becherboden (102) und einer umlaufenden Seitenwand (101) des Bechers einen Innenradius (r2) aufweist, der weniger als das 1,7-fache der Wandstärke (s) des Becherbodens (102) beträgt.

Fig. 1

110   110   110

103

100

101

102

**Fig. 2**

101

102

**Fig. 3**

**Fig. 4**

A)

101

200

102

B)

102

101

200'

# Fig. 5

Europäisches
Patentamt

European
Patent Office

Office européen
des brevets

**EUROPÄISCHER RECHERCHENBERICHT**

Nummer der Anmeldung

EP 24 17 8746

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2024/066580 A1 (FUKUNAGA MINORU [JP] ET AL) 29. Februar 2024 (2024-02-29) * Absatz [0037]; Anspruch 1; Abbildungen * ----- | 1-8 | INV. B21D22/28 B21D22/30 B21D51/16 H01M50/107 H01M50/119 |
| X | US 6 929 880 B1 (MORI KATSUHIKO [JP] ET AL) 16. August 2005 (2005-08-16) * Spalte 10, Zeilen 34-67; Abbildungen 7c,7d,7h * ----- | 1-8 | |
| X | US 9 919 351 B2 (ADVAL TECH HOLDING AG [CH]) 20. März 2018 (2018-03-20) | 7,8 | |
| A | * Spalte 12, Zeilen 52-64; Anspruch 1; Abbildung 10 * ----- | 1-6 | |

RECHERCHIERTE SACHGEBIETE (IPC)

B21D
H01M

Der vorliegende Recherchenbericht wurde für alle Patentansprüche erstellt

| Recherchenort | Abschlußdatum der Recherche | Prüfer |
|---|---|---|
| München | 25. Oktober 2024 | Knecht, Frank |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 17 8746

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-10-2024

| Im Recherchenbericht angeführtes Patentdokument | Datum der Veröffentlichung | Mitglied(er) der Patentfamilie | Datum der Veröffentlichung |
|---|---|---|---|
| US 2024066580 A1 | 29-02-2024 | JP 2022115390 A | 09-08-2022 |
| | | US 2024066580 A1 | 29-02-2024 |
| | | WO 2022163326 A1 | 04-08-2022 |
| US 6929880 B1 | 16-08-2005 | CA 2370882 A1 | 16-11-2000 |
| | | CN 1349666 A | 15-05-2002 |
| | | EP 1202360 A1 | 02-05-2002 |
| | | JP 4119612 B2 | 16-07-2008 |
| | | KR 20020042527 A | 05-06-2002 |
| | | US 6929880 B1 | 16-08-2005 |
| | | WO 0069004 A1 | 16-11-2000 |
| US 9919351 B2 | 20-03-2018 | CN 104334293 A | 04-02-2015 |
| | | EP 2834025 A1 | 11-02-2015 |
| | | JP 6155321 B2 | 28-06-2017 |
| | | JP 2015516301 A | 11-06-2015 |
| | | KR 20140143811 A | 17-12-2014 |
| | | US 2015093591 A1 | 02-04-2015 |
| | | WO 2013149938 A1 | 10-10-2013 |

EPO FORM P0461

Für nähere Einzelheiten zu diesem Anhang : siehe Amtsblatt des Europäischen Patentamts, Nr.12/82